# EUROPEAN PATENT APPLICATION

(11) **EP 4 653 873 A1**
(43) Date of publication of application: **26.11.2025**
(21) Application number: 23917639.9
(22) Date of filing: 17.11.2023
(51) Int. Cl.: G01N 35/02, B01F 31/10, B01F 31/80, B01F 35/21, G01N 35/00

(54) **AUTOMATED ANALYSIS DEVICE AND ABNORMALITY DIAGNOSIS METHOD**

(30) Priority: 16.01.2023 JP 2023004434
(71) Applicant: HITACHI HIGH-TECH CORPORATION, Tokyo 105-6409 (JP)
(72) Inventor: KOURAI Yuusuke, Tokyo 100-8280 (JP); SASAKI Kota, Tokyo 100-8280 (JP); SUZUKI Mutsumi, Tokyo 100-8280 (JP); TANAKA Yuto, Tokyo 105-6409 (JP); TSUNASHIMA Kenta, Tokyo 105-6409 (JP)
(74) Representative: Mewburn Ellis LLP
(86) International application number: PCT/JP2023/041469
(87) International publication number: WO 2024/154427

(57) **Abstract**

It is possible to perform abnormality diagnosis of a matching circuit that matches electric impedance between a drive circuit and an ultrasonic element. An automated analysis device irradiates a reaction liquid 500 in a reaction container 300 with ultrasonic waves to stir the reaction liquid 500, the automated analysis device including: a piezoelectric element 25 that irradiates the reaction liquid 500 with ultrasonic waves; a power supply unit 22 that supplies electric energy for driving the piezoelectric element 25; a matching circuit 23 that matches impedance between the piezoelectric element 25 and the power supply unit 22; and a diagnostic circuit 27 that measures a voltage or a current on an input side of the matching circuit 23 and a voltage or a current on an output side of the matching circuit 23, and diagnoses abnormality of the matching circuit 23 based on the voltage or the current on the input side and the voltage or the current on the output side.

## Description

### Technical Field

The present invention relates to an automated analysis device and an abnormality diagnosis method, and more particularly to an automated analysis device and an abnormality diagnosis method for irradiating a specimen and a reagent in a reaction container with an ultrasonic wave and stirring the specimen and the reagent.

### Background Art

In an automated analysis device of related art, in order to stir a specimen and a reagent, a method for inserting a stirring rod into a reaction container into which the specimen and the reagent are injected and rotating and reciprocating the stirring rod is used. In such an automated analysis device, since a phenomenon called carryover in which the specimen or the reagent attached to the stirring rod affects a next analysis result may occur, a mechanism for washing the stirring rod is required.

In order to solve this problem, PTL 1 and PTL 2 disclose an automated analysis device that irradiates a specimen and a reagent in a reaction container with an ultrasonic wave and stirs the specimen and the reagent. In the techniques of PTL 1 and PTL 2, since the specimen and the reagent are stirred by the ultrasonic wave without mediating the stirring rod or the like, it is not necessary to prepare a stirring mechanism for washing the stirring rod. Thus, carryover caused by using the stirring rod and bringing of washing water used in the mechanism can be avoided.

### Citation List

### Patent Literatures

PTL 1: JP 2001-013149 A
PTL 2: JP 2001-188070 A

### Summary of Invention

### Technical Problem

In the stirring mechanism using the ultrasonic wave, a height position at which the ultrasonic wave is emitted changes depending on a liquid amount in the reaction container. Thus, an array-type ultrasonic element may be used to select a height at which the ultrasonic wave is emitted. An area of the array-type ultrasonic element is restricted in order to match electric impedance between the drive circuit and the ultrasonic element, and there is a problem that a resolution of the height position where the ultrasonic wave is emitted is restricted.

Therefore, in order to improve the mismatch of the electric impedance between the drive circuit and the ultrasonic element, it is conceivable that a method for controlling a power transmission rate by using the matching circuit is selected. At this time, performing abnormality diagnosis of the matching circuit is a problem of a stable operation of the device.

The present invention has been made to solve the above-described problems, and an object of the present invention is to provide an automated analysis device and an abnormality diagnosis method capable of performing abnormality diagnosis of a matching circuit that matches electric impedance between a drive circuit and an ultrasonic element.

### Solution to Problem

In order to solve the above problems, an automated analysis device of the present invention is an automated analysis device that irradiates a specimen and a reagent in a reaction container with an ultrasonic wave to stir the specimen and the reagent, and includes an ultrasonic element that irradiates the specimen and the reagent with the ultrasonic wave, a drive circuit that supplies electric energy for driving the ultrasonic element, a matching circuit that matches impedance between the ultrasonic element and the drive circuit, and a diagnostic circuit that measures a voltage or a current on an input side of the matching circuit and a voltage or a current on an output side of the matching circuit, and diagnoses abnormality in the matching circuit based on the voltage or the current on the input side and the voltage or the current on the output side.

In addition, an abnormality diagnosis method of the present invention is an abnormality diagnosis method for a matching circuit that matches impedance between an ultrasonic element and a drive circuit, the ultrasonic element irradiating a specimen and a reagent in a reaction container with an ultrasonic wave, the drive circuit supplying electric energy for driving the ultrasonic element, and the method includes measuring a voltage or a current on an input side of the matching circuit, measuring a voltage or a current on an output side of the matching circuit, and diagnosing abnormality in the matching circuit based on a measurement value of the voltage or the current on the input side and a measurement value of the voltage or the current on the output side.

The present specification includes the disclosure of Japanese Patent Application No. 2023-004434 on which priority of the present application is based.

### Advantageous Effects of Invention

According to the present invention, it is possible to perform abnormality diagnosis of a matching circuit that matches electric impedance between a drive circuit and an ultrasonic element, and to realize a stable operation of a device.

Note that the above-described problems, configurations, and effects will be clarified by the following description of embodiments.

### Brief Description of Drawings

[FIG. 1] FIG. 1 is a schematic diagram illustrating an overall configuration of an automated analysis device 100 of a first embodiment.
[FIG. 2] FIG. 2 is a diagram illustrating details of a stirring unit 14 of the first embodiment.
[FIG. 3] FIG. 3 is a hardware block diagram of a diagnostic circuit 27 according to the first embodiment.
[FIG. 4] FIG. 4 is a diagram illustrating a relationship between a measurement result by the diagnostic circuit 27 of the first embodiment and an abnormal part.
[FIG. 5] FIG. 5 is a flowchart of abnormality diagnosis by the diagnostic circuit 27 of the first embodiment.
[FIG. 6] FIG. 6 is a diagram illustrating measurement results of an input voltage and an output voltage of a matching circuit 23 in a state of an open end according to the first embodiment.
[FIG. 7] FIG. 7 is a diagram illustrating the measurement results of the input voltage and the output voltage of the matching circuit 23 in the state of the open end of the first embodiment.
[FIG. 8] FIG. 8 is a diagram illustrating measurement results of an input voltage and an input current, and an output voltage and an output current of the matching circuit 23 in a state during operation of the first embodiment.
[FIG. 9] FIG. 9 is a diagram illustrating measurement results of an output voltage and an output current of the matching circuit 23 in the state during operation of the first embodiment.
[FIG. 10] FIG. 10 is a diagram illustrating details of a stirring unit 14 of a second embodiment.
[FIG. 11] FIG. 11 is a diagram illustrating a relationship between a measurement result by a diagnostic circuit 27 of the second embodiment and an abnormal part.
[FIG. 12] FIG. 12 is a flowchart of abnormality diagnosis by the diagnostic circuit 27 of the second embodiment.
[FIG. 13] FIG. 13 is a diagram illustrating measurement results of an input voltage and an input current, and an output voltage and an output current of a matching circuit 23 in a state of a dummy load of the second embodiment.
[FIG. 14] FIG. 14 is a diagram illustrating details of a stirring unit 14 of a third embodiment.

### Description of Embodiments

Hereinafter, embodiments of the present invention will be described with reference to the drawings. The embodiments are examples for describing the present invention, and are appropriately omitted and simplified in order to clarify the description. The present invention can be implemented in other various forms. Unless otherwise limited, each component may be singular or plural.

Positions, sizes, shapes, and ranges of components illustrated in the drawings may not necessarily represent actual positions, sizes, shapes, and ranges in order to facilitate understanding of the invention. Thus, the present invention is not necessarily limited to the positions, sizes, shapes, and ranges disclosed in the drawings.

In a case where there is a plurality of components having the same or similar functions, the same reference signs may be attached with different subscripts for description. In addition, in a case where it is not necessary to distinguish the plurality of components, the description may be made by omitting the subscript.

In the embodiment, processing performed by executing a program may be described. Here, a computer executes a program by a processor (for example, CPU or GPU), and performs processing defined by the program by using a storage resource (for example, a memory), an interface device (for example, a communication port), and the like. Thus, a subject of the processing performed by executing the program may be a processor. Similarly, the subject of the processing that performs the processing performed by executing the program may be a controller having a processor, a device, a system, a computer, or a node. The subject of the processing performed by executing the program may be an arithmetic unit, and may include a dedicated circuit that performs specific processing. Here, the dedicated circuit is, for example, a field programmable gate array (FPGA), an application specific integrated circuit (ASIC), a complex programmable logic device (CPLD), or the like.

The program may be installed on the computer from a program source. The program source may be, for example, a program distribution server or a computer-readable storage medium. In a case where the program source is the program distribution server, the program distribution server may include a processor and a storage resource that stores a distribution target program, and the processor of the program distribution server may distribute the distribution target program to another computer. In addition, in the embodiment, two or more programs may be realized as one program, or one program may be realized as two or more programs.

### [First embodiment]

First, an automated analysis device of a first embodiment will be described.

### (Automated analysis device 100)

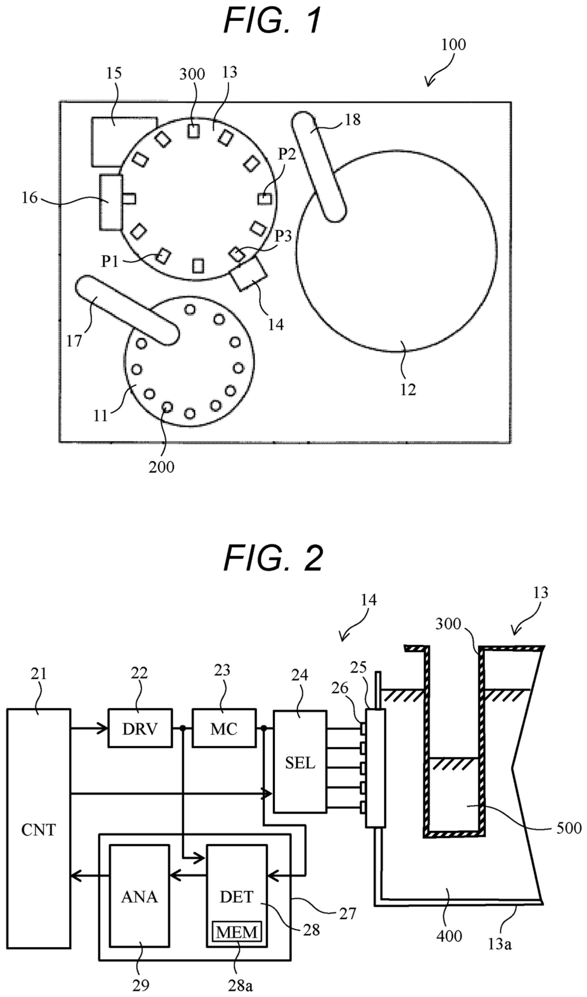

FIG. 1 is a schematic diagram illustrating an overall configuration of an automated analysis device 100 of the first embodiment. As illustrated in FIG. 1, the automated analysis device 100 includes a specimen erection unit 11, a reagent installation unit 12, a reaction unit 13, a stirring unit 14, a measurement unit 15, a cleaning unit 16, a specimen pipetting mechanism 17, and a reagent pipetting mechanism 18. An operation of each of the units 11 to 18 is controlled by a control unit (not illustrated).

Measurement target specimens 200 erected on the specimen erection unit 11 are dispensed by an amount necessary for analysis by the specimen pipetting mechanism 17 and are discharged to a reaction container 300 at a specimen discharge position P1. A reagent of the reagent installation unit 12 is dispensed by an amount necessary for analysis by the reagent pipetting mechanism 18, and is discharged to the reaction container 300 that stores the measurement target specimens 200 at a reagent discharge position P2. The reaction container 300 from which the measurement target specimen 200 and the reagent are discharged is moved to a stirring position P3. At the stirring position P3, the measurement target specimen 200 and the reagent in the reaction container 300 are stirred by an ultrasonic wave irradiated from a piezoelectric element 25 (see FIG. 2) of the stirring unit 14. Component analysis is performed in the measurement unit 15 on the measurement target specimen 200 sufficiently stirred by the stirring unit 14. After completion of the component analysis, the reaction container 300 is cleaned by the cleaning unit 16 and is used again for other analysis.

### (Stirring unit 14)

FIG. 2 is a diagram illustrating details of the stirring unit 14 of the first embodiment. As illustrated in FIG. 2, the stirring unit 14 includes a stirring control unit 21, a power supply unit 22, a matching circuit 23, an electrode selector 24, a piezoelectric element 25, a plurality of electrodes 26, and a diagnostic circuit 27.

### (Stirring control unit 21)

The stirring control unit 21 controls each unit of the stirring unit 14. For example, the stirring control unit 21 selects one or more electrodes 26 to which a voltage is applied in accordance with a liquid amount of a reaction liquid 500 (the measurement target specimen 200 and the reagent) in the reaction container 300, and instructs the electrode selector 24 to turn on the selected electrode 26. In addition, the stirring control unit 21 controls on and off of each switch of the electrode selector 24 for failure diagnosis of the power supply unit 22, the matching circuit 23, and the piezoelectric element 25.

### (Power supply unit 22)

The power supply unit 22 is a drive circuit that supplies electric energy for driving the piezoelectric element 25. The power supply unit 22 vibrates the piezoelectric element 25 by generating a voltage to be applied to the electrode 26 according to a signal input from the stirring control unit 21 and applying the voltage to the electrode 26 via the matching circuit 23 and the electrode selector 24. The signal is generated based on the liquid amount of the reaction liquid 500 in the reaction container 300 and a timing of stirring the reaction liquid 500.

### (Matching circuit 23)

The matching circuit 23 matches electric impedance between the power supply unit 22 and the piezoelectric element 25. The matching circuit 23 can be selected from a transformer type in which a signal line is wound around ferrite to match electric impedance with a winding number ratio between the primary and secondary, a low-pass filter type including a coil in series and a capacitor in parallel, a high-pass filter type including a capacitor in series and a coil in parallel, and the like. The matching circuit is installed singly or in multiple stages, and thus, the electric impedance between the power supply unit 22 and the piezoelectric element 25 can be matched.

### (Electrode 26 and electrode selector 24)

The plurality of electrodes 26 are attached to the piezoelectric element 25 along a height direction of the reaction container 300. The electrode selector 24 is a selection circuit that selects one or more electrodes 26 from among the plurality of electrodes 26 provided in the piezoelectric element 25, and electrically connects the power supply unit 22 and the selected electrode 26.

### (Piezoelectric element 25)

The piezoelectric element 25 is an ultrasonic element that irradiates the reaction liquid 500 in the reaction container 300 with the ultrasonic wave. When the voltage is applied from the power supply unit 22, the piezoelectric element 25 vibrates and outputs the ultrasonic wave. The output ultrasonic wave irradiates the reaction liquid 500 in the reaction container 300, and stirs the reaction liquid 500. The piezoelectric element 25 is provided along an inner wall of a thermostatic bath 13a filled with an ultrasonic wave propagation medium 400 so as to face a side surface of the reaction container 300. The ultrasonic wave propagation medium 400 is, for example, constant temperature water whose temperature is controlled to 37°.

### (Diagnostic circuit 27)

The diagnostic circuit 27 measures a voltage or a current on an input side of the matching circuit 23 and a voltage or a current on an output side of the matching circuit 23, and diagnoses abnormalities in the power supply unit 22, the matching circuit 23, and the piezoelectric element 25. Specifically, the diagnostic circuit 27 measures the voltage or the current on the input side of the matching circuit 23 in a state of an open end in which the electrode selector 24 is not connected to a load, and diagnoses the abnormality in the power supply unit 22. In addition, the diagnostic circuit 27 measures the voltage or the current on the input side of the matching circuit 23 and the voltage or the current on the output side of the matching circuit 23 in the state of the open end, and diagnoses the abnormality in the matching circuit 23. In addition, the diagnostic circuit 27 diagnoses the abnormality in the piezoelectric element 25 by measuring the voltage or the current on the output side of the matching circuit 23 in the state of the open end and a state during operation in which the electrode selector 24 is connected to the load (piezoelectric element 25).

The diagnostic circuit 27 may measure only the voltage on the input side of the matching circuit 23, may measure only the current, or may measure both the voltage and the current. In addition, the diagnostic circuit 27 may measure only the voltage on the output side of the matching circuit 23, may measure only the current, or may measure both the voltage and the current.

The diagnostic circuit 27 includes detector 28 having recorder 28a and analyzer 29. The detector 28 measures the voltage or the current on the input side of the matching circuit 23 and the voltage or the current on the output side of the matching circuit 23. A measurement value measured by the detector 28 is stored in the recorder 28a. In addition, the detector 28 transmits the measurement value to the analyzer 29.

The analyzer 29 analyzes the measurement value received from the detector 28 and determines whether or not there are the abnormalities in the power supply unit 22, the matching circuit 23, and the piezoelectric element 25.

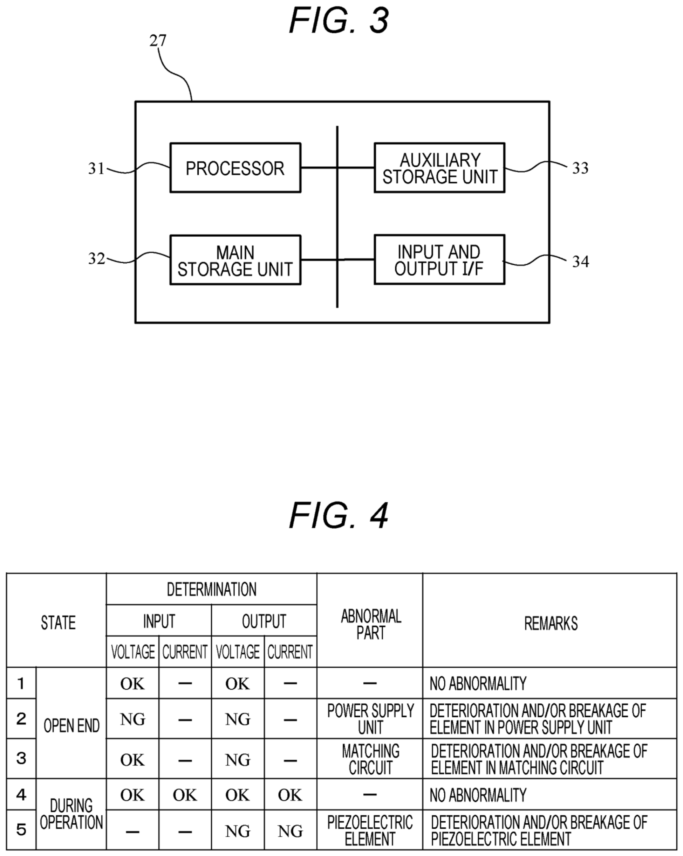

Here, a hardware configuration of the diagnostic circuit 27 will be described with reference to FIG. 3. As illustrated in FIG. 3, the diagnostic circuit 27 includes a processor 31, a main storage unit 32, an auxiliary storage unit 33, and an input and output I/F 34. The processor 31 is a central processing unit (CPU), a graphics processing unit (GPU), a digital signal processor (DSP), an application specific integrated circuit (ASIC), or the like. The I/F is an abbreviation of an interface. The main storage unit 32 is a dynamic random access memory (DRAM) or the like. The auxiliary storage unit 33 is a read only memory (ROM) or the like, and stores, for example, an abnormality diagnosis program for specifying an abnormal part in the stirring unit 14. The input and output I/F 34 is an interface for inputting the voltages or the currents on the input side and the output side of the matching circuit 23, and an interface for communicating with the stirring control unit 21.

FIG. 4 is a diagram illustrating a relationship between a measurement result by the diagnostic circuit 27 of the first embodiment and an abnormal part. Next, the relationship between the measurement result by the diagnostic circuit 27 and the abnormal part will be described with reference to FIG. 4. There are two types of states in which the voltage or the current on the input side of the matching circuit 23 and the voltage or the current on the output side of the matching circuit 23 are measured, and there are the state of the open end in which the load is not connected to the output side of the matching circuit 23 and the state during operation in which the load (piezoelectric element 25) is connected. The voltage and the current measured by the detector 28 are applied to the input side and the output side of the matching circuit 23.

(1) In a case where the measurement value of the voltage (or the current) on the input side of the matching circuit 23 is OK and the measurement value of the voltage (or the current) on the input side of the matching circuit 23 is OK in the state of the open end, the diagnostic circuit 27 determines that there is no abnormality in any of the power supply unit 22, the matching circuit 23, and the piezoelectric element 25.
(2) In a case where the measurement value of the voltage (or the current) on the input side of the matching circuit 23 is NG in the state of the open end, the diagnostic circuit 27 determines that there is the abnormality in the power supply unit 22.
(3) In a case where the measurement value of the voltage (or the current) on the input side of the matching circuit 23 is OK and the measurement value of the voltage (or the current) on the input side of the matching circuit 23 is NG in the state of the open end, the diagnostic circuit 27 determines that there is the abnormality in the matching circuit 23.
(4) In a case where the measurement value of the voltage (or the current) on the output side of the matching circuit 23 is OK in the state during operation, the diagnostic circuit 27 determines that there is no abnormality in any of the power supply unit 22, the matching circuit 23, and the piezoelectric element 25.
(5) In a case where the measurement value of the voltage (or the current) on the output side of the matching circuit 23 is NG in the state during operation, the diagnostic circuit 27 determines that there is the abnormality in the piezoelectric element 25.

### (Flowchart of abnormality diagnosis)

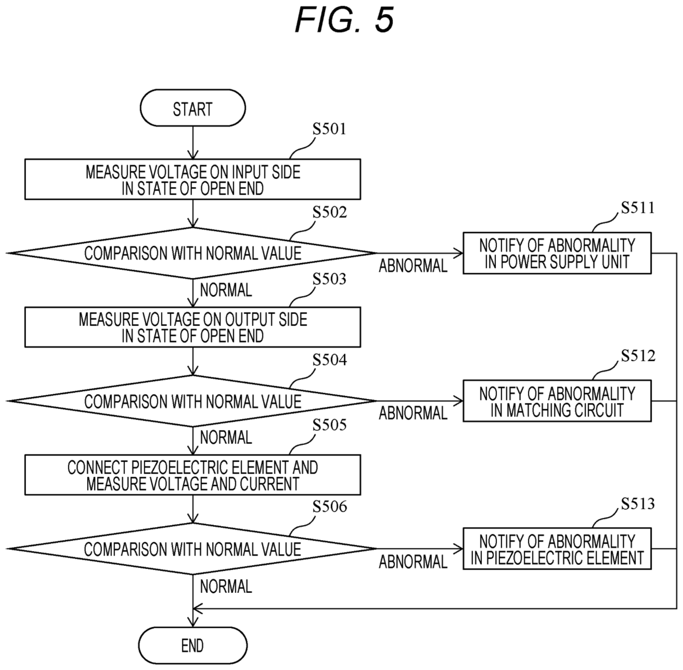

FIG. 5 is a flowchart of abnormality diagnosis of the first embodiment. Next, an abnormality diagnosis method of the first embodiment will be described with reference to FIG. 5. Each step of the flowchart of FIG. 5 is processed, for example, by the processor 31 of the diagnostic circuit 27 reading and executing the abnormality diagnosis program.

In S501, the diagnostic circuit 27 measures the voltage on the input side of the matching circuit 23 in the state of the open end in which the load is not connected to the output side of the matching circuit 23.

In S502, the diagnostic circuit 27 compares the measurement value of the voltage on the input side of the matching circuit 23 with a normal value. In a case where the measurement value of the voltage is normal as compared with the normal value, the processing proceeds to S503, and in a case where the measurement value of the voltage is abnormal, the processing proceeds to S511.

In S511, the diagnostic circuit 27 notifies the stirring control unit 21 of the abnormality in the power supply unit 22. Then, when the diagnostic circuit notifies of the abnormality in the power supply unit 22, the stirring control unit 21 displays the abnormality in the power supply unit 22 on a display unit or the like, and urges replacement of the power supply unit 22.

In S503, the diagnostic circuit 27 measures the voltage on the output side of the matching circuit 23 in the state of the open end in which the load is not connected to the output side of the matching circuit 23.

In S504, the diagnostic circuit 27 compares the measurement value of the voltage on the output side of the matching circuit 23 with a normal value. In a case where the measurement value of the voltage is normal as compared with the normal value, the processing proceeds to S505, and in a case where the measurement value of the voltage is abnormal, the processing proceeds to S512.

In S512, the diagnostic circuit 27 notifies the stirring control unit 21 of the abnormality in the matching circuit 23. Then, when the diagnostic circuit notifies of the abnormality in the matching circuit 23, the stirring control unit 21 displays the abnormality in the matching circuit 23 on a display unit or the like, and urges replacement of the matching circuit 23.

In S505, in a state where the piezoelectric element 25 is connected to the power supply unit 22 (the state during operation), the diagnostic circuit 27 measures the voltages and the currents on the input side and the output side of the matching circuit 23. In S505, the voltages and the currents on the input side and the output side of the matching circuit 23 are measured, but any one of the voltage and the current on any one of the input side and the output side of the matching circuit 23 may be measured, any one of the voltages and the currents on the input side and the output side of the matching circuit 23 may be measured, or the voltage and the current on any one of the input side and the output side of the matching circuit 23 may be measured.

In S506, the diagnostic circuit 27 compares the measurement values of the voltages and the currents on the input side and the output side of the matching circuit 23 with the normal values. In a case where the measurement values of the voltages and the currents on the input side and the output side of the matching circuit 23 are both normal as compared with the normal values, this flowchart is ended, and in a case where the measurement values are abnormal, the processing proceeds to S513.

In S513, the diagnostic circuit 27 notifies the stirring control unit 21 of the abnormality in the piezoelectric element 25. Then, when the diagnostic circuit notifies of the abnormality in the piezoelectric element 25, the stirring control unit 21 displays the abnormality in the piezoelectric element 25 on a display unit or the like to urge replacement of the piezoelectric element 25.

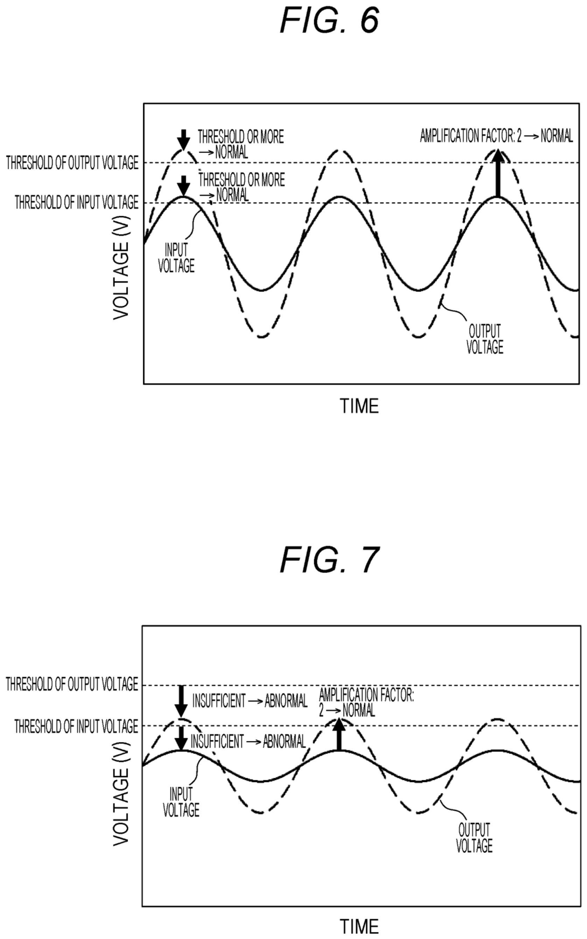

In the determination in S502, as in a time waveform of the voltage illustrated in FIG. 6, in a case where the voltage on the input side of the matching circuit 23 (the input voltage in FIG. 6) is higher than a threshold (a threshold of the input voltage in FIG. 6) for determining that the voltage is in a normal state (in the example of FIG. 6, in a case where the voltage temporarily becomes higher than the threshold within a predetermined time), it is determined that the voltage is in the normal state. On the other hand, as in a time waveform of the voltage illustrated in FIG. 7, in a case where the voltage on the input side of the matching circuit 23 (the input voltage in FIG. 7) is lower than a threshold (a threshold of the input voltage in FIG. 7) (in the example of FIG. 6, in a case where the voltage is constantly lower than the threshold within a predetermined time), it is determined that the power supply unit 22 is in an abnormal state.

In the determination in S504, as in the time waveform of the voltage illustrated in FIG. 6, in a case where the voltage on the output side of the matching circuit 23 (the output voltage in FIG. 6) is higher than a threshold (a threshold of the output voltage in FIG. 6) for determining that the voltage is in the normal state, it is determined that the voltage is in the normal state. On the other hand, as in the time waveform of the voltage illustrated in FIG. 7, in a case where the voltage on the output side of the matching circuit 23 (the output voltage in FIG. 7) is lower than a threshold (a threshold of the output voltage in FIG. 7), it is determined that the matching circuit 23 is in the abnormal state.

Here, although it has been described that the voltages on the input side and the output side of the matching circuit 23 are compared with the thresholds, a determination criterion other than the threshold may be used. For example, an amplification factor of the output voltage with respect to the input voltage of the matching circuit 23 can be used as a criterion. When a predetermined amplification factor (for example, 2) is set and the output voltage falls within a range of a proper amplification factor of the input voltage (for example, 2±10%) as illustrated in FIG. 6, it is determined that the matching circuit 23 is in the normal state.

In addition, two determination criteria may be used. For example, as illustrated in FIG. 7, even though the amplified output voltage falls within the range of the proper amplification factor, since the output voltage may not satisfy the threshold (the threshold of the output voltage in FIG. 7), the threshold and the amplification factor are used in combination. As a result, robust abnormality diagnosis can be performed.

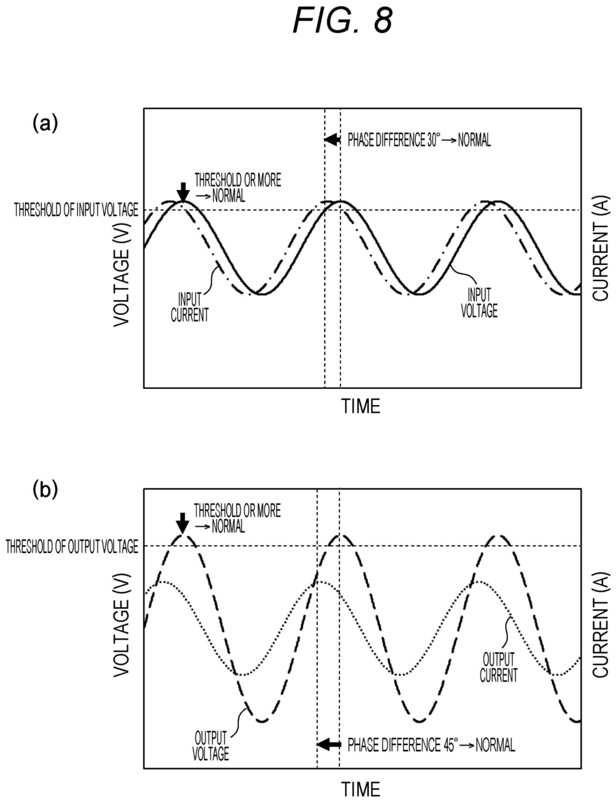

In the determination in S506, as illustrated in FIG. 8, the state of the piezoelectric element 25 is determined by the threshold determination of the voltages and currents on the input side and the output side of the matching circuit 23.

Note that, a phase difference (phase shift) between the voltage and the current may be used as the determination criterion, or a combination of the threshold and the phase difference may be used as the determination criterion. For example, when the phase difference between the voltage and the current is within a certain range, it may be determined that the piezoelectric element is in the normal state, and when the phase difference is out of the certain range, it may be determined that the piezoelectric element is in the abnormal state.

In addition, the phase difference between the voltage and the current is obtained, and thus, power can be calculated. As a result, a power transmission state can be quantitatively determined by using the calculated power.

In addition, an effective value of the voltage or the current may be compared with the threshold described above. In a case where the effective value is used, threshold determination for sudden noise is a more reliable result.

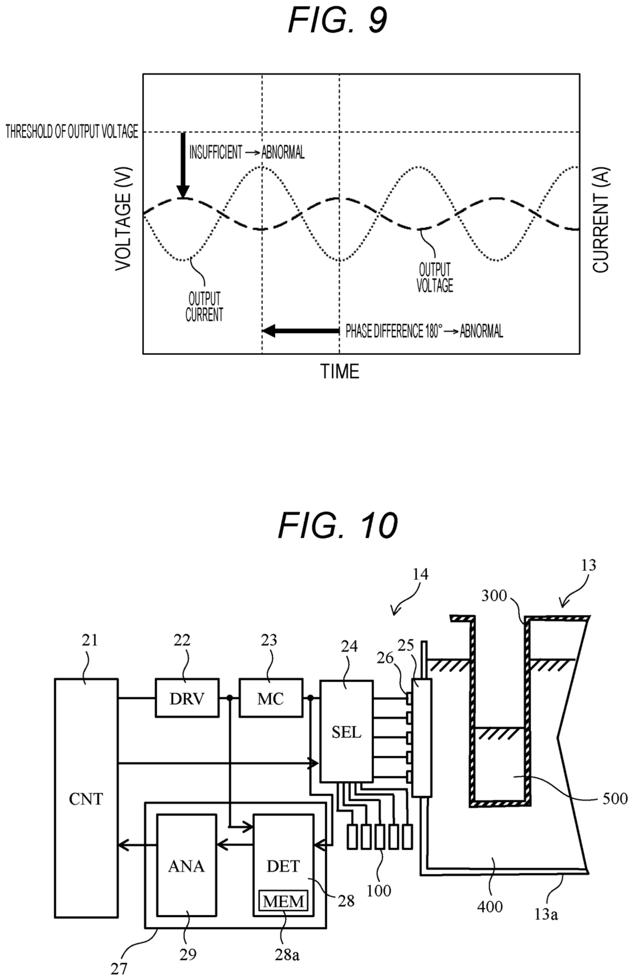

FIG. 9 illustrates a measurement result determined to be the abnormal state in the determination of S506. As illustrated in FIG. 9, since the output voltage of the matching circuit 23 does not satisfy the threshold (the threshold of the output voltage) and the phase difference between the voltage and the current is 180°, it can be determined that the matching circuit is in the abnormal state in which the power is not transmitted.

### (Effects of first embodiment)

As described above, in the first embodiment, not only the abnormality diagnosis of the power supply unit 22 and the piezoelectric element 25 but also the abnormality diagnosis of the matching circuit 23 that matches the impedance between the power supply unit 22 and the piezoelectric element 25 can be performed. As a result, a stable operation of the automated analysis device 100 can be realized.

In addition, in the configuration of FIG. 2, the matching circuit 23 that efficiently controls the power transmission from the power supply unit 22 to the piezoelectric element 25 is provided, and the influence on a circuit system due to a change in the electric impedance caused by changes in the liquid amount and viscosity of the reaction liquid 500 can be adjusted by setting the matching circuit 23 to be variable. As a result, the load on the circuit system can be reduced. Further, it is possible to obtain an effect of improving resolution of a height position of the irradiation of the ultrasonic wave by the piezoelectric element 25.

### [Second embodiment]

Next, an automated analysis device of a second embodiment will be described.

FIG. 10 is a diagram illustrating details of the stirring unit 14 of the automated analysis device of the second embodiment. In the second embodiment, points different from the first embodiment will be mainly described.

The stirring unit 14 of the second embodiment includes one or more dummy loads 30. The electrode selector 24 is connected to the electrode 26, connected to the dummy load 30, or not connected to any of the electrode 26 and the dummy load 30 in each of a plurality of systems branched in the electrode selector 24. In FIG. 10, the dummy load 30 may be configured to apply a load to a plurality of systems, or may be configured to apply a load only to a predetermined system. Electric impedance of the dummy load 30 is known and has a real part and an imaginary part of the electric impedance. The dummy load 30 includes a resistor, a coil, a capacitor, and the like.

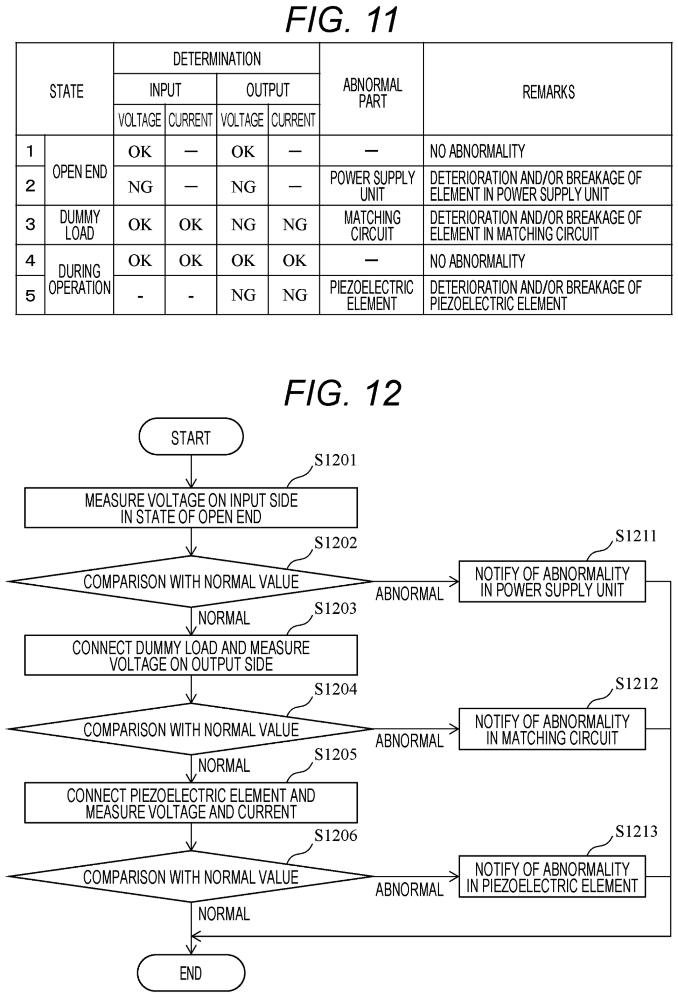

FIG. 11 is a diagram illustrating a relationship between a measurement result by the diagnostic circuit 27 of the second embodiment and an abnormal part. Next, the relationship between the measurement result by the diagnostic circuit 27 of the second embodiment and the abnormal part will be described with reference to FIG. 11. There are three types of states in which the voltage and the current on the input side of the matching circuit 23 and the voltage and the current on the output side of the matching circuit 23 are measured, and there are the state of the open end where the load is not connected to the output side of the matching circuit 23, the state of the dummy load where the dummy load 30 is connected, and the state during operation where the piezoelectric element 25 is connected. The voltage and the current measured by the detector 28 are applied to the input side and the output side of the matching circuit 23.

(1) In a case where the measurement value of the voltage (or the current) on the input side of the matching circuit 23 is OK and the measurement value of the voltage (or the current) on the input side of the matching circuit 23 is OK in the state of the open end, the diagnostic circuit 27 determines that there is no abnormality in any of the power supply unit 22, the matching circuit 23, and the piezoelectric element 25.
(2) In a case where the measurement value of the voltage (or the current) on the input side of the matching circuit 23 is NG in the state of the open end, the diagnostic circuit 27 determines that there is the abnormality in the power supply unit 22.
(3) In a case where the measurement values of the voltage and the current on the input side of the matching circuit 23 are OK and the measurement values of the voltage and the current on the input side of the matching circuit 23 are NG in the state of the dummy load, the diagnostic circuit 27 determines that there is the abnormality in the matching circuit 23.
(4) In a case where the measurement value of the voltage (or the current) on the output side of the matching circuit 23 is OK in the state during operation, the diagnostic circuit 27 determines that there is no abnormality in the piezoelectric element 25.
(5) In a case where the measurement value of the voltage (or the current) on the output side of the matching circuit 23 is NG in the state during operation, the diagnostic circuit 27 determines that there is the abnormality in the piezoelectric element 25.

### (Flowchart of abnormality diagnosis)

FIG. 12 is a flowchart of abnormality diagnosis of the second embodiment. Next, an abnormality diagnosis method of the second embodiment will be described with reference to FIG. 12. In the second embodiment, the content of S703 of the first embodiment is changed to S1203. Since the processing other than S1203 is similar to that of the first embodiment, the description thereof will be omitted.

In S1203, the diagnostic circuit 27 measures the voltages and the currents on the input side and the output side of the matching circuit 23 in the state of the dummy load in which the dummy load 30 is connected to the output side of the matching circuit 23. Here, the voltages and the currents on the input side and the output side of the matching circuit 23 are measured in the state of the dummy load, but the voltage and the current on any one of the input side and the output side of the matching circuit 23 may be measured, or the voltage or the current on any one of the input side and the output side of the matching circuit 23 may be measured.

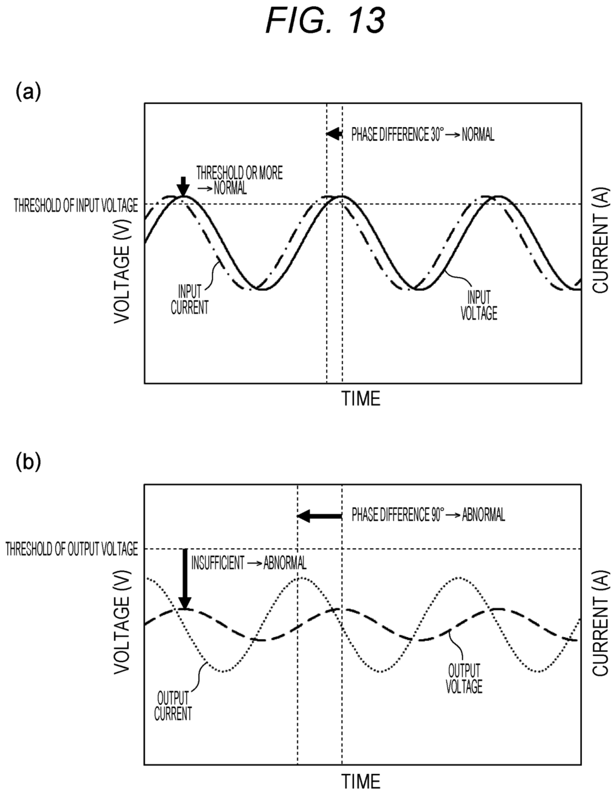

FIG. 13 is a diagram illustrating measurement results of voltages and currents when the dummy load 30 of the third embodiment is connected. As illustrated in (a) of FIG. 13, on the input side of the matching circuit 23, the voltage and the current indicate normal values, and it can be determined that the power supply unit 22 is operating normally. On the other hand, as illustrated in (b) of FIG. 13, on the output side of the matching circuit 23, since an amplitude of the voltage is insufficient and the phase difference between the voltage and the current changes, it can be determined that the matching circuit 23 is in the abnormal state. Further, power transmission efficiency in the matching circuit 23 can be calculated by obtaining the power by multiplication of the measurement result of the phase difference between the voltage and the current. In addition, the electric impedance can also be calculated by dividing the voltage and the current. These values are compared with normal values, and thus, it is possible to quantitatively evaluate the abnormal state and estimate the abnormal part in the matching circuit 23.

As described above, in the second embodiment, not only the abnormality diagnosis of the power supply unit 22 and the piezoelectric element 25 but also the abnormality diagnosis and quantitative evaluation of the matching circuit 23 that controls the power transmission from the power supply unit 22 to the piezoelectric element 25 can be performed.

### [Third embodiment]

Next, an automated analysis device of a third embodiment will be described.

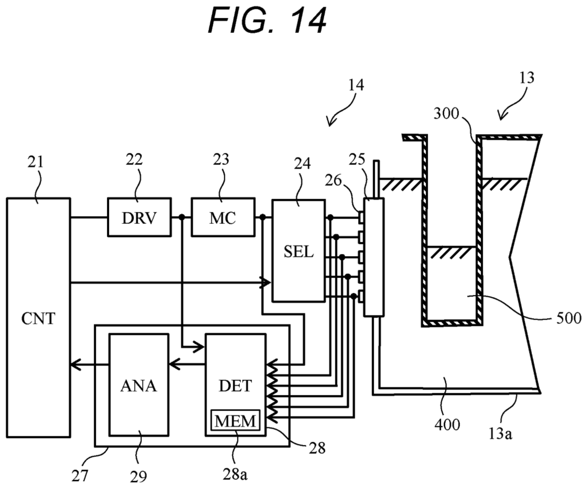

FIG. 14 is a diagram illustrating details of the stirring unit 14 of the automated analysis device of the third embodiment. In the third embodiment, points different from the first and second embodiments will be mainly described.

In the third embodiment, the abnormality in the electrode selector 24 is determined by measuring the voltage or the current between the electrode selector 24 and the piezoelectric element 25 and comparing the voltage or the current with the normal value. The detector 28 of the diagnostic circuit 27 measures not only the voltages or the currents on the input side and the output side of the matching circuit 23 but also the voltage or current on the output side of the electrode selector 24. Then, the analyzer 29 of the diagnostic circuit 27 determines the abnormality in the electrode selector 24 based on the measurement value of the voltage or the current on the output side of the electrode selector 24 measured by the detector 28.

A timing of the abnormality diagnosis of the electrode selector 24 may be either the state of the open end or the state during operation. In the case of the state of the open end, the analyzer 29 measures voltages before and after the electrode selector 24, and determines whether or not the voltage is normal by determining a threshold of an amplitude value. In addition, in the case of the state during operation, the analyzer 29 measures the voltages before and after the electrode selector 24, and determines whether or not the voltage is normal by determining the threshold of the amplitude value.

As described above, according to the third embodiment, not only the abnormality diagnosis of the power supply unit 22, the piezoelectric element 25, and the matching circuit 23 but also the abnormality diagnosis of the electrode selector 24 can be performed.

### (Modifications)

The present invention is not limited to the aforementioned embodiments, and includes various modifications. For example, the above-described embodiments have been described in detail for easy understanding of the present invention, and are not necessarily limited to those having all the described configurations. In addition, some of the components of a certain embodiment can be substituted into the components of another embodiment, and the components of another embodiment can be added to the component of a certain embodiment. In addition, other components can be added, removed, and substituted to, from, and into some of the components of the aforementioned embodiment.

For example, in the first embodiment described above, whether the matching circuit 23 is normal or abnormal is determined by comparing the measurement values of the input voltage and the output voltage with the thresholds. However, the present invention is not limited thereto, and an intermediate value may be set, and when the input voltage or the output voltage is the intermediate value, it may be determined that the intermediate value is a sign of abnormality.

In addition, the electric impedance of the dummy load of the second embodiment described above may be adjustable (a real part and an imaginary part of complex impedance can be adjusted). As a result, maximum values of the voltage, the current, and the power are measured, and the state of the matching circuit 23 can be grasped in detail.

### Reference Signs List

- 100: automated analysis device
- 11: specimen erection unit
- 12: reagent installation unit
- 13: reaction unit
- 14: stirring unit
- 15: measurement unit
- 16: cleaning unit
- 17: specimen pipetting mechanism
- 18: reagent pipetting mechanism
- 21: stirring control unit
- 22: power supply unit
- 23: matching circuit
- 24: electrode selector
- 25: piezoelectric element
- 26: electrode
- 27: diagnostic circuit
- 28: detector
- 28a: recorder
- 29: analyzer
- 30: dummy load
- P1: specimen discharge position
- P2: reagent discharge position
- P3: stirring position
- 200: measurement target specimen
- 300: reaction container
- 400: ultrasonic wave propagation medium
- 500: reaction liquid

All publications, patents, and patent applications cited herein are hereby incorporated by reference in their entirety.

## Claims

1. An automated analysis device that irradiates a specimen and a reagent in a reaction container with an ultrasonic wave to stir the specimen and the reagent, the automated analysis device comprising:
an ultrasonic element that irradiates the specimen and the reagent with the ultrasonic wave;
a drive circuit that supplies electric energy for driving the ultrasonic element;
a matching circuit that matches an impedance between the ultrasonic element and the drive circuit; and
a diagnostic circuit that measures a voltage or a current on an input side of the matching circuit and a voltage or a current on an output side of the matching circuit, and diagnoses abnormality in the matching circuit based on the voltage or the current on the input side and the voltage or the current on the output side.

2. The automated analysis device according to claim 1, wherein
the diagnostic circuit
measures a voltage or a current on the input side of the matching circuit and a voltage or a current on the output side of the matching circuit in a state where the ultrasonic element is not connected to the output side of the matching circuit, and diagnoses abnormalities in the matching circuit and the drive circuit based on the voltage or the current on the input side of the matching circuit and the voltage or the current on the output side of the matching circuit measured in a state where the ultrasonic element is not connected, and
measures a voltage or a current on the output side of the matching circuit in a state where the ultrasonic element is connected to the output side of the matching circuit, and diagnoses abnormality in the ultrasonic element based on the voltage or the current on the output side of the matching circuit measured in a state where the ultrasonic element is connected.

3. The automated analysis device according to claim 2, wherein
the diagnostic circuit measures the voltage and the current on the output side of the matching circuit in a state where the ultrasonic element is connected to the output side of the matching circuit, calculates a phase difference between the measured voltage and current, and diagnoses abnormality in the ultrasonic element based on a magnitude of the phase difference.

4. The automated analysis device according to claim 2, wherein
the diagnostic circuit measures the voltage and the current on the output side of the matching circuit in a state where the ultrasonic element is connected to the output side of the matching circuit, and diagnoses abnormality in the ultrasonic element based on power calculated from the measured voltage and current.

5. The automated analysis device according to claim 1, further comprising:
a dummy load connectable to the output side of the matching circuit; and
a selection circuit that selects a load to be connected to the output side of the matching circuit,
wherein the diagnostic circuit
measures the voltage or the current on the input side of the matching circuit and the voltage or the current on the output side of the matching circuit in a state where the ultrasonic element and the dummy load are not connected to the output side of the matching circuit, and diagnoses abnormality in the drive circuit based on the voltage or the current on the input side of the matching circuit and the voltage or the current on the output side of the matching circuit measured in a state where the ultrasonic element and the dummy load are not connected to the output side of the matching circuit,
measures the voltage or the current on the output side of the matching circuit in a state where the dummy load is connected to the output side of the matching circuit, and diagnoses abnormality in the matching circuit based on the voltage or the current on the output side of the matching circuit measured in a state where the dummy load is connected to the output side of the matching circuit, and
measures the voltage or the current on the output side of the matching circuit in a state where the ultrasonic element is connected to the output side of the matching circuit, and diagnoses abnormality in the ultrasonic element based on the voltage or the current on the output side of the matching circuit in a state where the ultrasonic element is connected to the output side of the matching circuit.

6. The automated analysis device according to claim 5, wherein electric impedance of the dummy load has a real part and an imaginary part.

7. The automated analysis device according to claim 5, wherein electric impedance of the dummy load is adjustable.

8. The automated analysis device according to claim 1, wherein
the diagnostic circuit diagnoses an abnormality in the matching circuit by comparing the voltage or the current on the input side of the matching circuit with a first threshold and comparing the voltage or the current on the output side of the matching circuit with a second threshold.

9. The automated analysis device according to claim 1, wherein a measurement value of the voltage or the current on the input side of the matching circuit and a measurement value of the voltage or the current on the output side of the matching circuit include an effective value.

10. The automated analysis device according to claim 1, further comprising:
a plurality of electrodes provided in the ultrasonic element along a height direction of the reaction container; and
a selection circuit that selects an electrode to be connected to the drive circuit from among the plurality of electrodes,
wherein the diagnostic circuit further measures a voltage or a current on an output side of the selection circuit, and diagnoses abnormality in the selection circuit based on the voltage or the current on the output side of the selection circuit.

11. An abnormality diagnosis method for a matching circuit that matches impedance between an ultrasonic element and a drive circuit, the ultrasonic element irradiating a specimen and a reagent in a reaction container with an ultrasonic wave, the drive circuit supplying electric energy for driving the ultrasonic element, the method comprising:
measuring a voltage or a current on an input side of the matching circuit;
measuring a voltage or a current on an output side of the matching circuit; and
diagnosing abnormality in the matching circuit based on a measurement value of the voltage or the current on the input side and a measurement value of the voltage or the current on the output side.
